# EUROPÄISCHE PATENTANMELDUNG

(11) **EP 2 724 840 A1**
(43) Veröffentlichungstag der Anmeldung: **30.04.2014**
(21) Anmeldenummer: 12007322.6
(22) Anmeldetag: 25.10.2012
(51) Int. Cl.: B29C 65/02, B29C 65/72, B65B 51/30, B29C 65/74, B29C 65/04, B29C 65/08, B29C 65/10, B29C 65/36, B29C 65/18, B29C 65/30, B29C 65/22, B65B 51/26, B29C 65/14, B29C 65/16

(54) **Schweißeinrichtung und Verfahren zum Verschweißen von wenigstens zwei Werkstofflagen eines Werkstücks**

(71) Anmelder: ROPEX Industrie-Elektronik GmbH, 74321 Bietigheim-Bissingen (DE)
(72) Erfinder: Rößle, Andreas, 70771 Leinfelden-Echterdingen (DE)
(74) Vertreter: Kocher, Mark Werner

(57) **Zusammenfassung**

Die Erfindung betrifft eine Schweißeinrichtung zum Verschweißen von wenigstens zwei Werkstofflagen eines Werkstücks (7), mit einem Schweißwerkzeug (2), das einen ersten Werkzeugteil (9) und einen zweiten Werkzeugteil (10) umfasst, die relativbeweglich zueinander angeordnet sind und die einen größenvariablen Schweißspalt (11) zur Aufnahme und Verschweißung des Werkstücks (7) bilden, mit einer Schweißenergiequelle (5) zur Bereitstellung von Schweißenergie, mit einer Einstelleinrichtung (3) zur Einleitung einer Stellbewegung auf wenigstens eines der Werkzeugteile (9, 10), wobei der erste und/oder der zweite Werkzeugteil (9, 10) mit der Schweißenergiequelle (5) verbunden ist und für eine kontaktgebundene Einkopplung von Schweißenergie auf das Werkstück (7) ausgebildet ist und mit einem Steuergerät (4) zur Beeinflussung eines Energiestroms von der Schweißenergiequelle. Erfindungsgemäß ist vorgesehen, dass dem Schweißwerkzeug (2) ein Energiewandlermittel (6) zugeordnet ist, das mit dem Steuergerät (4) und mit einer Energiequelle verbunden ist und das für eine kontaktlose Einkopplung von Schweißenergie in das Werkstück (7) ausgebildet ist.

## Beschreibung

Die Erfindung betrifft eine Schweißeinrichtung zum Verschweißen von wenigstens zwei Werkstofflagen eines Werkstücks, mit einem Schweißwerkzeug, das einen ersten Werkzeugteil und einen zweiten Werkzeugteil umfasst, die relativbeweglich zueinander angeordnet sind und die einen größenvariablen Schweißspalt zur Aufnahme und Verschweißung des Werkstücks bilden, mit einer Schweißenergiequelle zur Bereitstellung von Schweißenergie, mit einer Einstelleinrichtung zur Einleitung einer Bewegung auf wenigstens eines der Werkzeugteile, wobei zumindest der erste Werkzeugteil mit der Energiequelle verbunden ist und für eine kontaktgebundene Einkopplung von Schweißenergie auf das Werkstück ausgebildet ist und mit einem Steuergerät zur Beeinflussung eines Energiestroms von der Energiequelle zum Werkzeugteil und/oder zur Ansteuerung der Einstelleinrichtung. Ferner betrifft die Erfindung ein Verfahren zum Verschweißen von wenigstens zwei Werkstofflagen eines Werkstücks.

Aus der EP2327534 A1 ist es bekannt, eine Ultraschallschweißvorrichtung und eine thermische Schweißvorrichtung miteinander zu kombinieren, wobei durch die Verwendung der Ultraschallschweißvorrichtung ein Reinigungseffekt für den Schweißnahtbereich erzielt werden kann. Ferner kann hierdurch eine verbesserte Verschweißung von dünnen Folien erzielt werden, die üblicherweise eine geringere Dämpfung aufweisen, so dass sie nur unzureichend mit Ultraschall verschweißt werden können. Werden die dünnen Folien aber zuvor oder gleichzeitig mit der thermischen Schweißvorrichtung erwärmt, besitzen sie eine höhere Absorptionsrate für Ultraschall, wodurch die Qualität der Verschweißung wesentlich gesteigert wird. Zudem werden dünne und harte Folien durch das Erwärmen mit der thermischen Schweißvorrichtung weicher, wodurch die Gefahr einer Beschädigung der Folien während der Ultraschallverschweißung vermindert wird.

Eine Anpassung einer Ultraschallschweißeinrichtung an ein zu verschweißendes, aus mehreren Werkstofflagen, insbesondere Kunststofffolien, gebildetes Werkstück erfordert einen hohen Aufwand bei der konstruktiven Gestaltung der Sonotrode und des als Gegenhalter dienenden Amboss, um eine gleichmäßige Einkopplung der Ultraschallenergie in das Werkstück zu erreichen. Bei einer Kombination der Ultraschallschweißeinrichtung mit einer thermischen Schweißvorrichtung werden die Anpassungsschwierigkeiten erhöht. In diesem Fall muss nunmehr der Amboss zusätzlich an die Randbedingungen des jeweils gewählten thermischen Schweißverfahrens, insbesondere einer dauerbeheizten Schweißeinrichtung oder einer Impulsschweißeinrichtung, wie sie beispielsweise von der Anmelderin mit den Produktnamen "RESISTRON" bzw. "CIRUS" vertrieben wird, angepasst werden.

Die Aufgabe der Erfindung besteht darin, eine Schweißeinrichtung so zu verbessern, dass eine Vergrößerung eines Prozessfensters, also der für ein vorteilhaftes Schweißergebnis einzuhaltenden Randbedingungen, erreicht wird.

Diese Aufgabe wird gemäß einem ersten Erfindungsaspekt für eine Schweißeinrichtung der eingangs genannten Art mit den Merkmalen des Anspruchs 1 gelöst. Hierbei ist vorgesehen, dass dem Schweißwerkzeug ein Energiewandlermittel zugeordnet ist, das mit dem Steuergerät und mit einer Energiequelle verbunden ist und das für eine kontaktlose Einkopplung von Schweißenergie in das Werkstück ausgebildet ist. Mit Hilfe der kontaktlosen Einkopplung von Schweißenergie in das Werkstück können unterschiedliche Schweißabläufe für die Verschweißung der Werkstofflagen des Werkstücks durchgeführt werden. Bei einem ersten exemplarischen Schweißablauf werden die Werkstofflagen des Werkstücks bereits vor und/oder unmittelbar nach dem Einbringen des Werkstücks in den Schweißspalt mittels der vom Energiewandlermittel bereitstellbaren Schweißenergie erwärmt und somit für den nachfolgenden, kontaktgebundenen Schweißvorgang vorbereitet, der nach dem Schließen des Schweißspalts vorgenommen wird. Bei einem zweiten exemplarischen Schweißablauf findet eine zusätzliche Einbringung von Wärme durch das Energiewandlermittel während des kontaktgebundenen Schweißvorgangs statt, um die Verbindung der Werkstofflagen zu verbessern. Das Energiewandlermittel kann beispielsweise an einem oder an beiden Werkzeugteilen des Schweißwerkzeugs angeordnet oder in einem oder in beiden Werkzeugteilen des Schweißwerkzeugs integriert sein.

Die Einstelleinrichtung kann wahlweise als Aktor, beispielsweise als elektrischer oder fluidischer Antrieb, oder als Einstellmittel für eine manuelle Verstellung ausgebildet sein, um eine Annäherung der beiden Werkzeugteile des Schweißwerkzeugs derart zu ermöglichen, dass dadurch der Schweißspalt in Abhängigkeit von dem zu verschweißenden Werkstück ausgebildet wird. Bei einem diskontinuierlichen Schweißverfahren, wie es beispielsweise bei der Schlauchbeutelherstellung eingesetzt wird, bei der ein Folienschlauch in vorgebbaren Abständen mit einer Trennschweißung in verschlossene Einzelbeutel aufgeteilt wird, ist vorzugsweise ein Aktor vorgesehen, der das Schweißwerkzeug automatisiert öffnen und schließen kann. Bei einem kontinuierlichen Schweißverfahren, beispielsweise zum randseitigen Verschweißen eines Folienschlauchs, bei dem der Folienschlauch längs der Schweißkante bewegt wird, ist die Einstelleinrichtung beispielsweise als Einstellschraube ausgebildet, um eine Anpassung des Schweißspalts an die Eigenschaften des Werkstücks zu ermöglichen.

Vorteilhafte Weiterbildungen der Erfindung sind Gegenstand der Unteransprüche.

Bei einer Weiterbildung der Erfindung ist vorgesehen, dass dem ersten Werkzeugteil oder dem ersten und dem zweiten Werkzeugteil eine Fluidleitung für ein flüssiges oder gasförmiges Wärmeträgerfluid und/oder eine elektrische Heizeinrichtung und/oder ein Ultraschallgenerator zugeordnet sind. Mit Hilfe der Fluidleitung kann ein Wärmeträgerfluid, das abseits des Schweißwerkzeugs von einer Wärmequelle und/oder Kühleinrichtung, beispielsweise einer elektrischen Heizeinrichtung und/oder einem Kühlkreislauf, temperiert wird, zur Temperierung wenigstens eines Werkzeugteils eingesetzt werden. Da bei einer Nutzung eines Wärmeträgerfluids, das durch eine Fluidleitung im Werkzeugteil geführt wird, üblicherweise keine raschen Temperaturänderungen des Werkzeugteils erzielt werden, wird auch von einer Dauerheizung gesprochen. Ergänzend oder alternativ kann im Werkzeugteil eine elektrische Heizeinrichtung vorgesehen sein, die insbesondere als elektrisch betriebener Heizwiderstand ausgebildet ist und die je nach Ausgestaltung eine träge bis hochdynamische Erwärmung und Abkühlung des jeweiligen Werkzeugteils ermöglicht. Exemplarisch ist die elektrische Heizeinrichtung als Impulsschweißeinrichtung ausgebildet, bei der auf einem metallischen Träger ein Schichtaufbau aus elektrisch leitenden und elektrisch Isolierenden, vorzugsweise zumindest teilweise keramischen Schichten, verwirklicht ist und die bei geeigneter Ansteuerung und einer gegebenenfalls vorgesehenen aktiven Kühlung, insbesondere mittels eines flüssigen Kühlfluids, während eines Aufheizvorgangs mit Temperaturgradienten von mehr als 500 , vorzugsweise mehr als 1000, insbesondere bis zu 7000 Grad Celsius pro Sekunde ermöglicht. Bei der nachfolgenden Abkühlung kann ein Temperaturgradient von bis zu 1500 Grad Celsius pro Sekunde ausgehend von der Maximaltemperatur der Heizeinrichtung erreicht werden.

Bei Verwendung einer Impulsschweißeinrichtung in Form eines elektrischen Heizbands, beispielsweise bei dem von der Anmelderin vertriebenen "RESISTRON"-System, wird beim Aufheizvorgang exemplarisch ein Temperaturgradient von 100 bis 200 Grad Celsius pro Sekunde und beim Abkühlvorgang, ausgehend von der Maximaltemperatur der Heizeinrichtung, ein Temperaturgradient von 10 bis 50 Grad Celsius pro Sekunde erreicht.

Alternativ oder ergänzend kann dem Werkzeugteil auch ein Ultraschallgenerator zugeordnet sein, der zur Erzeugung von Ultraschallwellen eingesetzt wird, die vom Werkzeugteil an die Werkstofflagen des Werkstück übertragen werden und dort durch Mikrobewegung der wenigstens zwei Werkstofflagen zueinander zu einer Entstehung von Reibungswärme führen, durch die der Schweißprozess bewirkt wird. Vorteilhaft ist es, wenn dem ersten Werkzeugteil eine Fluidleitung und dem zweiten Werkzeugteil ein Ultraschallgenerator oder eine elektrische Heizeinrichtung zugeordnet sind. Alternativ kann vorgesehen sein, dass dem ersten Werkzeugteil eine elektrische Heizeinrichtung und dem zweiten Werkzeugteil ein Ultraschallgenerator und gegebenenfalls eine Fluidleitung zugeordnet sind.

Zweckmäßig ist es, wenn das Energiewandlermittel für die kontaktlose Einkopplung von Schweißenergie auf das Werkstück abseits des ersten und zweiten Werkzeugteils angeordnet ist. Hierdurch können das erste und das zweite Werkzeugteil in vorteilhafter Weise auf die Bedürfnisse des wenigstens einen kontaktgebundenen Schweißverfahrens angepasst werden. Das Energiewandlermittel ist vorzugweise in der Nähe des Schweißspalts am Schweißwerkzeug angeordnet, um eine möglichst kurze Übertragungsstrecke für die zu übertragende Schweißenergie zu gewährleisten.

Vorteilhaft ist es, wenn das Energiewandlermittel für die kontaktlose Einkopplung von Schweißenergie auf das Werkstück dem ersten und/oder dem zweiten Werkzeugteil zugeordnet ist. Hierdurch kann eine besonders kompakte Gestaltung des Schweißwerkzeugs verwirklicht werden.

Bei einer Weiterbildung der Erfindung ist vorgesehen, dass das Energiewandlermittel mit der Schweißenergiequelle des wenigstens einen Werkzeugteils verbunden ist. Beispielsweise ist die Schweißenergiequelle als elektrische Energiequelle ausgebildet.

In weiterer Ausgestaltung der Erfindung umfasst das Energiewandlermittel einen Hochfrequenzgenerator und/oder eine Induktionsspule und/oder eine Quelle für elektromagnetische Wellen und/oder eine Heißgasquelle. Mit Hilfe eines Hochfrequenzgenerators kann elektrische Energie zur Bereitstellung eines hochfrequenten elektrischen Wechselfeldes genutzt werden, das in dem zu verschweißenden Werkstück bei geeigneter Werkstoffauswahl eine Erwärmung aufgrund von dielektrischen Verlusten in den Werkstofflagen bewirkt. Eine Induktionsspule wird mit hochfrequenter elektrischer Energie betrieben und gibt ein hochfrequentes magnetisches Wechselfeld ab, das bei geeigneter Werkstoffauswahl, beispielsweise einem mit Metallpartikeln gefüllten und oder mit einer Metallisierung versehenen Kunststoff, zu Wirbelströmen im Werkstück führt, die eine Erwärmung bewirken. Diese Wärme wird zur Verbindung der Werkstofflagen genutzt. Eine Quelle für elektromagnetische Wellen kann beispielsweise als Infrarotlampe oder als Laserquelle ausgebildet sein und ermöglicht eine lokale Erwärmung der Werkstofflagen durch Absorption der auftreffenden elektromagnetischen Wellen.

Bevorzugt ist das Steuergerät für eine Koordination einer Energieeinkopplung in das Werkstück über wenigstens ein Werkzeugteil und über das Energiewandlermittel ausgebildet. Durch diese Koordination kann eine vorteilhafte Wärmeeinbringung in das Werkstück gewährleistet werden.

Die Aufgabe der Erfindung wird gemäß einem zweiten Aspekt durch ein Verfahren zum Verschweißen von wenigstens zwei Werkstofflagen eines Werkstücks gelöst. Dabei umfasst das Verfahren die folgenden Schritte: Einlegen des Werkstücks in einen von zwei zueinander relativbeweglichen Werkzeugteilen eines Schweißwerkzeugs gebildeten Schweißspalt, Schließen des Schweißspalts durch eine Relativbewegung der beiden Werkzeugteile zueinander, um eine Anpresskraft auf die Werkstofflagen aufzubringen, kontaktgebundene Einkopplung von Schweißenergie auf die Werkstofflagen über wenigstens eine der beiden Werkzeugteile und Einkopplung von Schweißenergie mittels eines Energiewandlermittels, das die Schweißenergie kontaktlos in die Werkstofflagen einkoppelt. Dabei kann die Relativbewegung der beiden Werkzeugteile mittels einer Einstelleinrichtung vorgesehen sein, die je nach Ausgestaltung des Schweißverfahrens als automatisierter, beweglicher Aktor oder als Einstellmittel, insbesondere als Einstellschraube, ausgebildet ist. Bei einem diskontinuierlichen Schweißverfahren wird das Schweißwerkzeug zur Ausbildung der Schweißnaht kurzzeitig geschlossen und nach dem Schweißvorgang wieder geöffnet, um einen Weitertransport des Werkstücks bis zur nächsten Schweißstelle zu ermöglichen. Bei einem kontinuierlichen Schweißverfahren wird der Schweißspalt üblicherweise in Abhängigkeit von den Eigenschaften des Werkstücks eingestellt und während des Schweißvorgangs beibehalten, wobei das Werkstück hierbei mit seiner Schweißkante längs der beiden Werkzeugteile entlang gefördert wird, so dass eine Schweißnaht gebildet werden kann, die länger als die räumliche Ausdehnung der Werkzeugteile ist. Es kann je nach der Beschaffenheit des Werkstücks auch vorgesehen sein, bei einem kontinuierlichen Schweißverfahren die Größe des Schweißspalts zu steuern oder zu regeln.

Bei einer Weiterbildung des Verfahrens ist vorgesehen, dass über das wenigstens eine Werkzeugteil eine kontaktgebundene Einkopplung von Wärmeenergie und/oder von mechanischer Schwingungsenergie vorgenommen wird und dass das Energiewandlermittel die Schweißenergie als elektrisches und/oder elektromagnetisches und/oder magnetisches Energiefeld bereitstellt.

In weiterer Ausgestaltung des Verfahrens führt die vom Energiewandlermittel bereitgestellte Schweißenergie zu einer Erwärmung des Werkstücks im Bereich des Schweißspalts durch Absorption von Wärme im Werkstück und/oder durch Energieumwandlung in Wärme im Werkstück.

Eine vorteilhafte Ausführungsform der Erfindung ist in der Zeichnung dargestellt. Dabei zeigt:
- Figur 1: eine schematische Darstellung eine Schweißeinrichtung zum Verschweißen von wenigstens zwei Werkstofflagen eines Werkstücks in einer Vorderansicht,
- Figur 2: eine Seitenansicht der Schweißeinrichtung gemäß der Figur 1,
- Figur 3: eine Draufsicht auf eine erste Ausführungsform einer Schweißschiene,
- Figur 4: eine Vorderansicht der Schweißschiene gemäß Figur 3,
- Figur 5: eine Draufsicht auf eine zweite Ausführungsform einer Schweißschiene,
- Figur 6: eine Vorderansicht der Schweißschiene gemäß Figur 5,
- Figur 7: eine Schnittdarstellung der Schweißschiene gemäß den Figuren 5 und 6,
- Figur 8: eine Draufsicht auf eine dritte Ausführungsform einer Schweißschiene,
- Figur 9: eine Vorderansicht der Schweißschiene gemäß Figur 8,
- Figur 10: eine Schnittdarstellung der Schweißschiene gemäß den Figuren 8 und 9,
- Figur 11: eine Draufsicht auf eine vierte Ausführungsform einer Schweißschiene,
- Figur 12: eine Vorderansicht der Schweißschiene gemäß Figur 11 und
- Figur 13: eine Schnittdarstellung der Schweißschiene gemäß den Figuren 11 und 12.

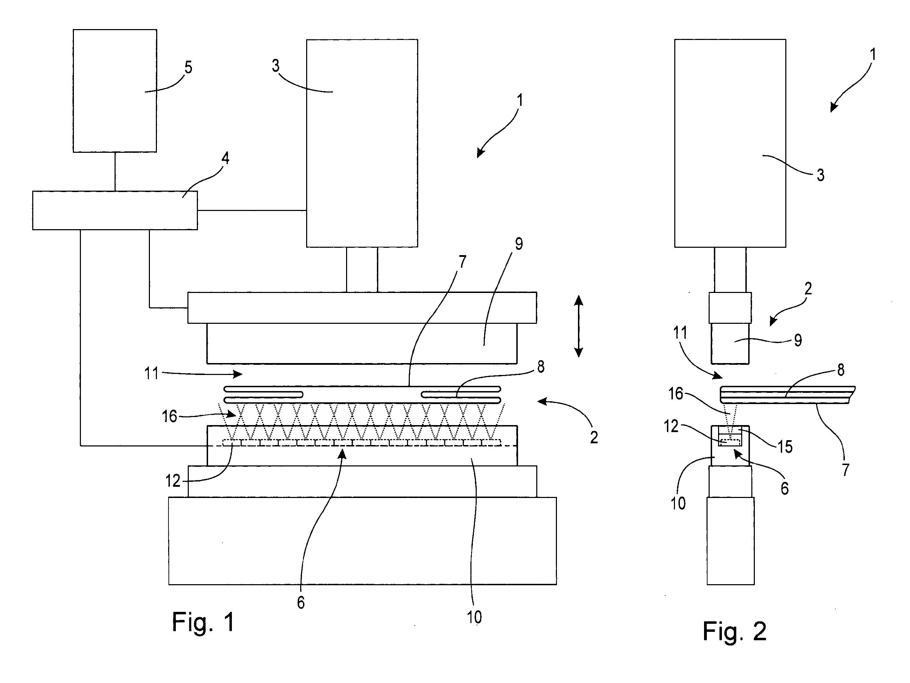

Eine in der Figur 1 dargestellte Schweißeinrichtung 1 umfasst ein Schweißwerkzeug 2, einen Einstelleinrichtung 3, ein Steuergerät 4, eine Schweißenergiequelle 5 und ein Energiewandlermittel 6.

Die Schweißeinrichtung 1 dient zur Verschweißung von wenigstens zwei Werkstofflagen eines in der Figur 1 stirnseitig gezeigten Werkstücks 7. Dieses Werkstück 7 ist beispielsweise als Folienbeutel ausgebildet und weist - rein exemplarisch - an seitlichen Rändern jeweils eine Einfaltung 8 auf. Hierdurch ergibt sich im Bereich der exemplarisch zu verschweißenden Öffnung des Folienbeutels eine bereichsweise Dopplung der Werkstofflagen, so dass in der Mitte des Werkstücks 7 zwei Werkstofflagen miteinander zu verschweißen sind, während am Rand des Werkstücks 7 jeweils vier Materiallagen zu verschweißen sind. Dieser sogenannte Lagensprung muss bei der Auswahl der nachstehend näher beschriebenen Schweißschienen für das Schweißwerkzeug 2 berücksichtig werden, um ein qualitativ hochwertiges Schweißergebnis für das Werkstück 7 sicherstellen zu können.

Das Schweißwerkzeug 2 umfasst einen ersten Werkzeugteil 9 und einen zweiten Werkzeugteil 10, die relativbeweglich zueinander angeordnet sind. Hierzu ist beispielsweise eine nicht näher dargestellte Linearführung zwischen den beiden Werkzeugteilen 9, 10 vorgesehen. Die beiden Werkzeugteile 9, 10 bilden einen größenvariablen Schweißspalt 11 aus, der zur Aufnahme und Verschweißung des Werkstücks 7 dient. Für eine Relativbewegung der beiden Werkzugteile 9, 10 zueinander ist die beispielsweise als elektrischer Lineardirektantrieb ausgebildete Einstelleinrichtung 3 vorgesehen, die eine lineare Öffnungs- bzw. Schließbewegung der beiden Werkzeugteile 9, 10 zueinander ermöglicht. Exemplarisch ist vorgesehen, dass der erste Werkzeugteil 9 bewegt wird, während der zweite Werkzeugteil 10 ruht.

Das beiden Werkzeugteile 9, 10 dienen zur Aufbringung von Anpresskräften auf das Werkstück 7, wobei die Anpresskräfte stets dazu dienen, eine vorteilhafte Lage der Werkstofflagen des Werkstücks 7 zueinander während des Schweissvorgangs zu gewährleisten. Ferner dienen die Anpresskräfte dazu, eine vorteilhafte Einkopplung von Energie von wenigstens einem der Werkzeugteile 9, 10 auf das Werkstück 7 sicherzustellen. In Abhängigkeit von der Gestaltung der Werkzeugteile 9, 10 wird von wenigstens einem Werkzeugteil 9 und/oder 10 ein unmittelbarer oder mittelbarer Wärmeeintrag in das Werkstück 7 hervorgerufen.

Ein unmittelbarer Wärmeeintrag liegt vor, wenn das jeweilige Werkzeugteil 9, 10 erwärmt wird und diese Wärme über den mechanischen Kontakt zwischen dem jeweiligen Werkzeugteil 9 und/oder 10 durch Wärmeleitung oder Konduktion auf das Werkstück 7 übertragen wird. Dabei kann das Werkzeugteil 9 und/oder 10 mittels eines Wärmeträgerfluids erwärmt werden, das an einem Ort abseits des Schweißwerkzeugs 2 erwärmt wird. Ergänzend oder alternativ kann eine unmittelbare Energieumwandlung im jeweiligen Werkzeugteil 9 und/oder 10, beispielsweise durch Umwandlung elektrischer Energie in Wärme vorgesehen sein, wie dies beispielsweise bei elektrischen Heizpatronen mit Widerstandsheizung, bei elektrisch betriebenen Heizdrähten oder Heizbändern, bei den CIRUS-Schweißwerkzeugen oder bei induktiv beheizten Werkzeugteilen der Fall ist, wobei bei dem letztgenannten Verfahren die induktive Erwärmung des Werkzeugteils im Vordergrund steht.

Ein mittelbarer Wärmeeintrag liegt dann vor, wenn das jeweilige Werkzeugteil 9 und/oder 10 durch Zufuhr von Energie angeregt wird, beispielsweise in hochfrequente Schwingungen versetzt wird, und diesen Anregungszustand in mechanischer Kopplung auf das Werkstück 7 überträgt, wodurch auch das Werkstück 7 angeregt wird und eine lokale Erwärmung erfährt. Ein typisches Beispiel für einen mittelbaren kontaktbehafteten Wärmeeintrag ist das Ultraschallschweißen, bei dem das jeweilige Werkzeugteil 9 und/oder 10 durch einen Ultraschallgenerator in Schwingungen versetzt wird und diese Schwingungen auf das Werkstück 7 übertragen werden und dort zu einer lokalen Erwärmung führen.

Das Steuergerät 4 kann für eine Steuerung oder Regelung des Schweißvorgangs vorgesehen sein und ist zur Beeinflussung eines Energiestroms von der beispielsweise als Wärmequelle für ein Wärmeträgerfluid oder als elektrische Spannungsquelle ausgebildeten Schweißenergiequelle 5 zu dem wenigstens einen Werkzeugteil 9 und/oder 10 vorgesehen. Für eine Regelung eines Schweißvorgangs ist wenigstens ein nicht näher dargestellter Sensor, beispielsweise ein Temperatursensor oder ein Drucksensor, der im Bereich des Schweißspalts 11 angeordnet ist, vorgesehen, um eine Eingangsgröße für eine geschlossene Regelschleife bereitzustellen.

Ferner ist dem Schweißwerkzeug 2 ein Energiewandlermittel 6 zugeordnet, das mit dem Steuergerät 4 verbunden ist. Bei der in den Figuren 1 und 2 dargestellten Ausführungsform einer Schweißeinrichtung 1 ist das Energiewandlermittel 6 indirekt über das Steuergerät 4 mit der als Energiequelle für das Energiewandlermittel 6 dienenden Schweißenergiequelle 5 verbunden. Abweichend von den Werkzeugteilen 9 und 10 ist das Energiewandlermittel 6 für eine kontaktlose Einkopplung von Schweißenergie in das Werkstück 7 ausgebildet. Exemplarisch ist das Energiewandlermittel 6 als Diodenleiste aus mehreren aneinander aufgereihten Laserdioden 12 gebildet, die unter einer für die von den Laserdioden 12 abgegebene Laserstrahlung transparenten Abdeckung 15 im Werkzeugteil 10 angeordnet sind. Dabei ist jeder der Laserdioden 12 eine nicht näher dargestellte Linse zugeordnet, die den abgegebenen Laserstrahl zu einem Strahlenbündel mit stark ovalem Querschnitt formt, so dass die Strahlenbündel der benachbart angeordneten Laserdioden 12 einen in der Figur 1 angedeuteten Strahlenvorhang 16 ausbilden. Die kontaktlos wirkende Laserstrahlung des Strahlenvorhangs 16 führt bei Auftreffen und Absorption im Werkstück 7 zu einer lokalen Erwärmung, wodurch der Schweißvorgang, der durch den kontaktgebundenen mittelbaren und/oder unmittelbaren Wärmeeintrag hervorgerufen wird, unterstützt wird.

Da das Energiewandlermittel 6 einen kontaktlosen Wärmeeintrag in das Werkstück 7 ermöglicht, kann bereits zu einem Zeitpunkt, zu dem das Schweißwerkzeug 2 noch nicht geschlossen ist, mit einer Erwärmung des Werkstücks 7 begonnen werden. Damit kann erreicht werden, dass das Werkstück 7 bereits zum Zeitpunkt des Schließens des Schweißwerkzeugs 2, zu dem der kontaktgebundene Wärmeeintrag von wenigstens einem der Werkzeugteile 9 und/oder 10 beginnt, eine erhöhte Temperatur aufweist, so dass beispielsweise der Schweißvorgang schneller abgeschlossen werden kann. Hierdurch wird die gewünschte Vergrößerung des Prozessfensters für den Schweißvorgang erreicht. Exemplarisch kann beispielsweise durch den zusätzlichen Wärmeeintrag durch kontaktlose Energieübertragung vom Energiewandlermittel 6 auf das Werkstück 7 die Temperatur von beheizten Werkzeugteilen 9 und/oder 10 gesenkt oder die Ultraschallenergie auf die Werkzeugteile 9 und/oder 10 reduziert werden. Dadurch werden beispielsweise die Außenseiten der Werkstofflagen, die in unmittelbarem Berührkontakt mit den Werkzeugteilen 9 und/oder 10 stehen und die in erster Line der kontaktgebundenen Wärmeübertragung in einen Schweißbereich an den Innenseiten der Werkstofflagen dienen, einem geringeren thermischen Stress ausgesetzt.

Bei einer nicht dargestellten Ausführungsform der Schweißeinrichtung sind anstelle der Diodenleiste 6 eine Induktionsspulenanordnung und/oder eine Hochfrequenzgeneratoranordnung und/oder ein Heißluftgebläse dem Schweißwerkzeug zugeordnet, um einen zusätzlichen Wärmeeintrag in das Werkstück bewirken zu können.

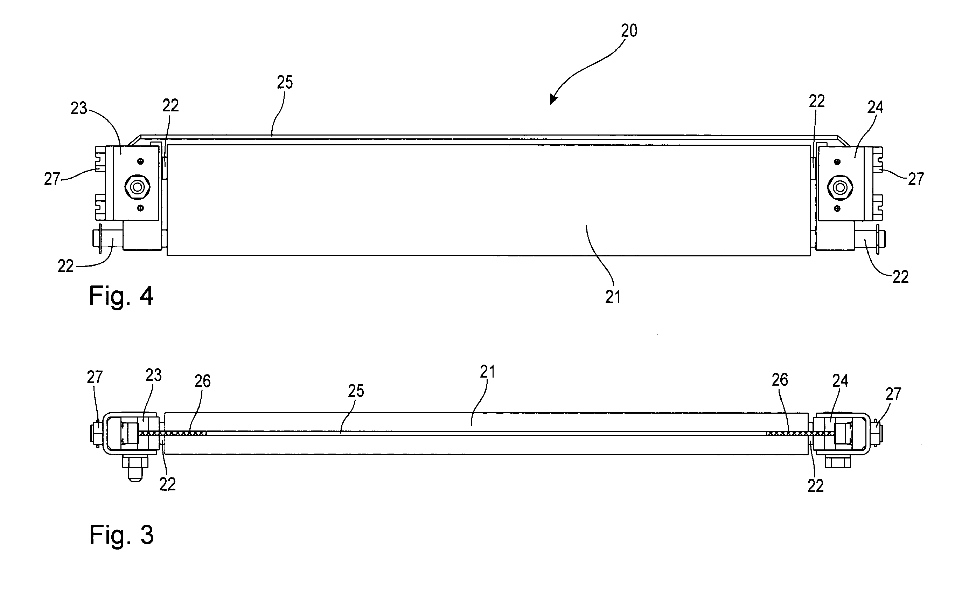

Nachstehend erfolgt eine Erläuterung der in den Figuren 3 bis 13 dargestellten Schweißschienen, die beispielsweise als erstes Werkzeugteil 9 und/oder als zweites Werkzeugteil 10 in die Schweißeinrichtung 1 eingesetzt werden können.

Die in den Figuren 3 und 4 dargestellte Schweißschiene 20 umfasst einen exemplarisch aus Aluminium hergestellten, quaderförmig ausgebildeten Grundkörper 21. Am einander entgegengesetzten Schmal- oder Stirnseiten des Grundkörpers 21 sind insgesamt vier, jeweils paarweise parallel angeordnete Führungsstäbe 22 aus einem elektrisch isolierenden Material angebracht. Auf den paarweise angeordneten Führungsstäben 22 ist jeweils schiebebeweglich ein Kontaktblock 23, 24 angeordnet, der aus einem elektrisch leitenden Material, beispielsweise aus Stahl, hergestellt ist. An den Kontaktblöcken 23, 24 sind jeweils Endbereiche eines Heizdrahts 25 angebracht, die beispielsweise mit einer Schraube 27 gesichert sind. Der Heizdraht 25 weist in einem zentralen Bereich eine blanke Oberfläche auf, die für einen kontaktgebundenen, unmittelbaren Wärmeeintrag auf das Werkstück 7 ausgebildet ist. In Randbereichen des Heizdrahts 27 kann jeweils ein Beschichtungsbereich vorgesehen sein, in dem der Heizdraht 25 mit einer elektrisch besonders gut leitenden Beschichtung, beispielsweise aus Kupfer oder Silber versehen ist, um in diesen Bereichen eine geringere Erwärmung aufgrund eines reduzierten elektrischen Widerstands zu bewirken.. Im aktiven Bereich zwischen den Randbereichen kann das Heizelement wahlweise unbeschichtet oder antihaftbeschichtet sein. Alternativ ist der Heizdraht 25 im zentralen Bereich mit einer Antihaftabdeckung, insbesondere mit einem Band aus PTFE-Material, überdeckt. Der Heizdraht 25 wird vorzugsweise dauerhaft mit elektrischer Energie beaufschlagt. Dabei kann wahlweise ein gesteuerter Betrieb vorgesehen sein, indem eine elektrische Spannung oder ein elektrischer Strom vorgegebenen werden. Alternativ kann die Schweißschiene 20 unter Zuhilfenahme eines nicht dargestellten Sensors, beispielsweise eines Temperatursensors, der die Temperatur des Heizdrahts ermittelt und an das Steuergerät 4 weiterleitet, ein geregelter Betrieb der Schweißschiene 20 vorgesehen werden. Bei einer weiteren, nicht näher dargestellten Ausführungsform wird ein Stromfluss durch den Heizdraht oder das Heizband als Eingangsgröße für eine widerstandsbasierte Temperaturregelung genutzt, wobei zugrundegelegt wird, dass der elektrische Widerstand des Heizdrahts oder Heizbands in einer vorgebbaren Beziehung zur Temperatur des Heizdrahts oder Heizbands steht. Ein derartiges System aus Heizdraht oder Heizband und zugehörigem strombasierten Temperaturregler kann wahlweise als Impuls- oder Dauerheizung betrieben werden und wird von der Anmelderin unter dem Produktnamen RESISTRON vertrieben.

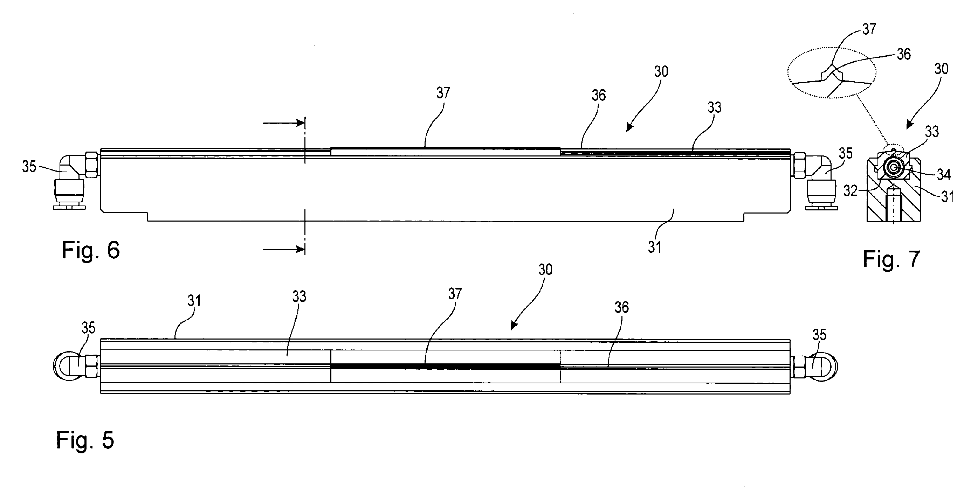

Bei der in den Figuren 5, 6 und 7 dargestellten Schweißscheine 30 ist in einem aus Aluminium hergestellten Grundkörper 31 exemplarisch eine symmetrisch ausgebildete, teilweise hinterschnittene Nut 32 vorgesehen, in der ein Silikonprofil 33 eingezogen und formschlüssig verriegelt ist. Das Silikonprofil 33 ist von einer Fluidleitung 34 durchsetzt, die sich zwischen zwei seitlich am Grundkörper 31 angebrachten Anschlussstutzen 35 erstreckt und die von einem nicht dargestellten Wärmeträgerfluid, beispielsweise Wasser oder Öl, durchströmt werden kann. An einer Oberseite des Silikonprofils 33 ist eine schneidenartig ausgebildete Trennkante 36 vorgesehen, die während des Schweißvorgangs eine Trennung des in den Schweißspalt 11 eingelegten Werkstücks 7 in zwei getrennte Werkstücke 7 bei gleichzeitiger endseitiger Verschweißung der Werkstücke 7 bewirkt. Exemplarisch ist in einem mittleren Bereich des Silikonprofils 33 eine erhöht ausgebildete, zweite Trennkante 37 vorgesehen. Diese Trennkante 37 ist vorzugsweise aus einem Material ausgebildet, das zumindest in einer Eigenschaft von den Eigenschaften des Silikonprofils 33 abweicht. Beispielsweise kann die Trennkante 37 eine abweichende Härte (insbesondere eine abweichende Shore-Härte) aufweisen. Exemplarisch kann die Trennkante aus Metall, Keramik oder einem Kunststoffmaterial hergestellt sein, insbesondere aus einem Polyetheretherketon bzw. PEEK-Material. Diese Trennkante 37 gewährleistet bei einem Lagensprung in den Dicken der Werkstofflagen des Werkstücks 7 eine gleichmäßige Verschweißung der Werkstofflagen längs der gesamten Schweißnaht.

Sofern bei der Durchführung des Schweißvorgangs keine Trennung des Werkstücks in zwei getrennte Werkstücke erzielt werden soll, wird auf eine Trennkante verzichtet und das Silikonprofil weist eine zumindest im Wesentlichen ebene Oberfläche auf. Mit einem derart gestalteten Silikonprofil kann beispielsweise eine Flachnaht am Werkstück erzeugt werden.

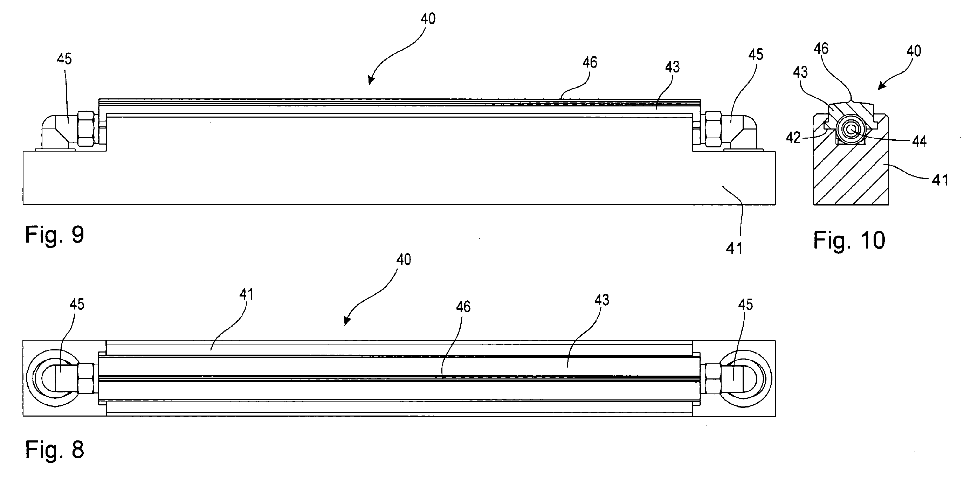

Bei der in den Figuren 8, 9 und 10 dargestellten Schweißschiene 40 ist ein Silikonprofil 43 oberhalb einer Fluidleitung 44 in einer Nut 42 eines Grundkörpers 41 verriegelt und mit einer Trennkante 46 versehen, wobei sich die Fluidleitung 44 zwischen zwei Anschlussstutzen 45 erstreckt. Die Schweißschiene 40 ermöglicht einen einfacheren Austausch des Silikonprofils 43 verglichen mit der Schweißschiene 30. Demgegenüber weist die Schweißschiene 30 aufgrund der durch das Silikonprofil 33 geführten Fluidleitung 34 eine verbesserte Wärmeeinkopplung auf. Anstelle eines Silikonprofils kann auch ein Profil aus Metall, Keramik oder Kunststoff verwendet werden, vorzugsweise aus einem Polyetheretherketon-Kunststoff bzw. PEEK-Material.

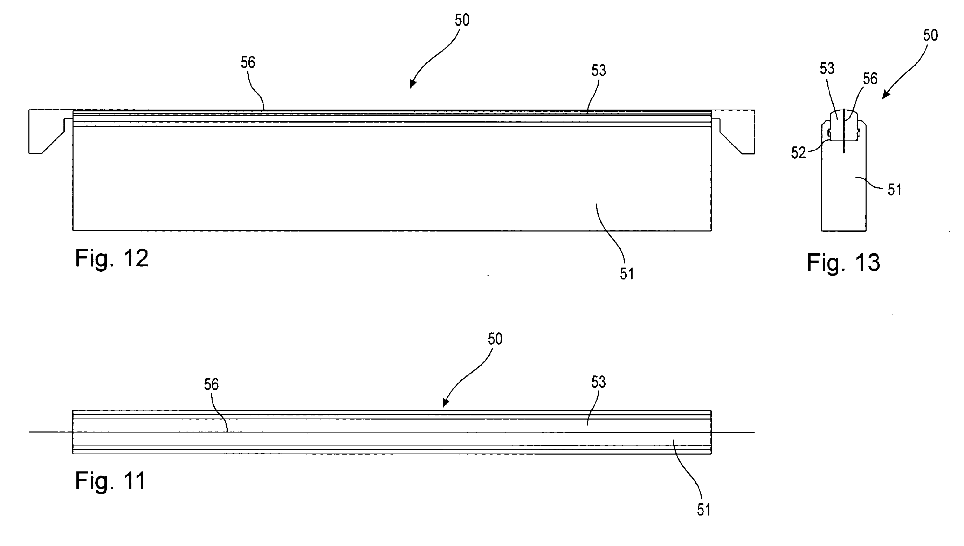

Die in den Figuren 11, 12 und 13 dargestellte Schweißschiene 50 umfasst einen Grundkörper 51 mit einer Nut 52, ein Silikonprofil 52 und eine als bandförmiges Heizband aus einem elektrisch leitenden, metallischen Werkstoff hergestellte Trennkante 56. Bei einer nicht dargestellten Ausführungsform des Heizbands ist dieses entweder flächig ausgebildet, um eine Flachnaht zu erzeugen oder profiliert ausgebildet, beispielsweise als dem Werkstück zugewandte U-Profil, um eine Doppelnaht zu erzeugen. Aufgrund der Einbettung des Heizbands in das Silikonprofil 52 wird eine Konzentration der Wärmeabgabe in den Stirnbereich der Schweißschiene 50 gewährleistet, der in wärmeübertragenden Kontakt mit dem Werkstück 7 kommt. Hierdurch wird der Energiebedarf für die Schweißschiene 50 reduziert. Die Schweißschiene 50 kann aufgrund der verglichen mit der Schweißschiene 20 reduzierten Einwirkung von äußeren Einflüssen wie beispielsweise der Umgebungstemperatur und/oder Gasströmungen um die Schweißschiene 50, die zur Abkühlung des Heizbands führen könnten, gesteuert im Impuls- oder Dauerbetrieb betrieben werden.

Nachstehend werden zunächst verschiedene Schweißverfahren und anschließend unterschiedliche Kombinationen von Schweißverfahren für die erfindungsgemäße Schweißeinrichtung beschrieben, wobei davon ausgegangen wird, dass beide Werkzeugteile 9 und 10 jeweils zur Durchführung wenigstens eines der beschriebenen kontaktbehafteten Schweißverfahren, insbesondere Impulsheizung, Dauerheizung, Ultraschall, ausgebildet ist. Zu diesen an sich bekannten Kombinationen von kontaktbehafteten Schweißverfahren kann dann wenigstens ein weiteres, kontaktloses Schweißverfahren aus der Gruppe hochfrequenzschweißen mittels eines Hochfrequenzgenerators, Induktionsschweißen mittels einer hochfrequent bestromten Induktionsspule, Schweißen mit einer Quelle für elektromagnetische Wellen, insbesondere einer Infrarotlicht- oder Laserquelle und/oder Schweißen mit einer Heißgasquelle kombiniert werden.

Bei einem Schweißverfahren mit Dauerbeheizung findet eine zumindest im Wesentlichen konstante Wärmezufuhr, insbesondere mittels eines Wärmeträgerfluids, oder eine im Wesentlichen konstante Energiezufuhr, insbesondere mittels elektrischer Energie, an die Schweißschiene statt. Die Schweißschiene umfasst einen Grundkörper, an dem ein wärmespeichernder Körper aus Werkstoffen wie Stahl, Aluminium, Gummi, Silikon, Kunststoff angebracht ist. Ferner ist an der Schweißschiene eine Fluidleitung für ein Wärmeträgerfluid und/oder eine elektrische Widerstandsheizung, insbesondere in Form einer Heizpatrone angebracht, womit die dem Werkstück zugewandte Außenoberfläche der Schweißschiene erwärmt werden kann. Die Temperatur an der Außenoberfläche der Schweißschiene oder am Werkstück kann optional mittels eines, insbesondere direkt in die Schweißschiene eingebauten oder berührungslos arbeitenden, Temperatursensors oder über den Stromfluss durch das Heizelement im Sinne einer elektrischen Widerstandsregelung nach dem RESISTON-Prinzip erfasst und vom (RESISTRON-) Steuergerät gesteuert oder geregelt werden..

Beim Impulsschweißverfahren wird abweichend vom Schweißverfahren mit Dauerbeheizung nur in einem vorgebbaren Zeitfenster eine Energiezufuhr an die Schweißschiene vorgenommen, um den Schweißvorgang zu bewirken. Während der übrigen Zeit, beispielsweise während des Öffnens und Schließens des Schweißwerkzeugs, findet keine oder nur eine deutlich reduzierte Energiezufuhr an die Schweißschiene statt. Um eine rasche Aufheizung und Abkühlung der Schweißschiene zu erreichen, wird für das Impulsschweißen ein Heizelement, beispielsweise eine elektrische Widerstandsheizung, mit geringer thermischer Masse eingesetzt. Hierbei kommen beispielsweise, insbesondere im Falle der widerstandsgeregelten RESISTRON-Technologie, ein als Metallstreifen ausgebildetes Heizband, eine dünne Metallplatte oder eine Anordnung von elektrisch leitenden und elektrisch nichtleitenden Schichten auf einem Trägersubstrat, z.B. Glaskeramik-Schichten wie bei der CIRUS/UPT-Technologie der Anmelderin, zum Einsatz. Ergänzend kann eine Temperierung, insbesondere eine aktive Kühlung, des Grundkörpers oder Trägersubstrats mittels eines Kühlfluids wie Kühlwasser oder Öl vorgesehen sein. Mit dem Impulsschweißverfahren können sensible Materialien, die eine Abkühlung nach dem Schweißprozess benötigen, vorteilhaft verarbeitet werden..

Beim Ultraschallschweißen werden die zu verschweißenden Werkstofflagen mit Schall- oder Stoßwellen hoher Frequenz angeregt, wodurch sich an Grenzflächen zwischen den Werkstofflagen aufgrund der freigesetzten Reibungswärme eine Erhitzung stattfindet, die zu der gewünschten Verschweißung führt. Die Schall- oder Stoßwellen werden durch einen Ultraschallgenerator erzeugt und in eine Sonotrode eingeleitet, die die Schall- oder Stoßwellen in direktem mechanischem Kontakt in das Werkstück einkoppelt. Hierzu wird das Werkstück mittels der Sonotrode auf einen Amboss gepresst, da nur bei vollständiger und gleichmäßiger mechanischer Kopplung zwischen Sonotrode und Werkstück eine qualitativ hochwertige Verschweißung der Werkstofflagen erreicht werden kann. Da die Wärmeerzeugung direkt an den Grenzflächen der Werkstofflagen stattfindet, können mit dem Ultraschallschweißverfahren auch dicke Materialen und Materialien mit hohem Schmelzpunkt schnell verarbeitet werden. Ferner erlaubt das Ultraschallschweißverfahren auch die Verarbeitung verschmutzter (kontaminierter) Werkstofflagen, wie sie beispielsweise nach dem Befüllen eines Folienbeutels mit einem Produkt durch Produktrückstände wie Produktstäube oder flüssige Produktbestandteile, auftreten können, da durch die Relativbewegung der Werkstofflagen während der Ultraschallbeaufschlagung eine zumindest teilweise Verdrängung der Produktrückstände möglich ist, wodurch die Verschweißbarkeit des Werkstücks verbessert wird. Eine Verarbeitung von Werkstücken mit Lagensprüngen ist bei alleiniger Anwendung des Ultraschallschweißverfahrens aufgrund der inhomogenen Einkopplung der Bewegungsenergie in die unterschiedlich dicken Bereiche des Werkstücks schwierig.

Zur Vergrößerung eines Prozessfensters für einen Schweißvorgang kann vorgesehen werden, zwei kontaktgebundene Schweißverfahren miteinander zu kombinieren. Alternativ können auch ein kontaktgebundenes und ein kontaktloses Schweißverfahren miteinander kombiniert werden. Alternativ kann auch eine Kombination von zwei kontaktgebundenen Schweißverfahren mit einem kontaktlosen Schweißverfahren vorgesehen werden.

Nachstehend sollen einige Kombinationen derartiger Schweißverfahren erläutert werden.

Bei einer Kombination des Impulsschweißverfahrens mit einem Schweißverfahren mit Dauerheizung ist ein Werkzeugteil als Dauerheizung und ein gegenüberliegender Werkzeugteil als Impulsheizung ausgebildet. Dabei kann insbesondere der zur Impulsbeheizung dienende Werkzeugteil eine Profilierung aufweisen, um ein vorgebbares Schweißnahtprofil zu bestimmen, beispielsweise als Sickenband oder T-Profil. Dabei gewährleistet die Dauerheizung aufgrund der hohen Wärmekapazität für den zu verschweißenden Bereich des Werkstücks ein schnelles Erreichen einer vorgebaren Grundtemperatur, während die Impulsheizung lokal begrenzt mit hohem Temperaturgradienten bei Aufheizung und/oder Abkühlung den Wärmeeintrag für die Verschweißung der Werkstofflagen bereitstellt. Dabei kann die Impulsheizung mit einer flexiblen Unterlage ausgestattet werden, so daß auch Materialien unterschiedlicher Dicke oder mit Lagensprüngen (beispielsweise bei einem Folienbeutel mit Seitenfalte) verarbeitet werden können. In die Dauerheizung kann eine mechanische Kontur eingearbeitet werden, die den Schweißvorgang positiv beeinflusst wie beispielsweise eine keilförmige Trennkante zur Auftrennung des Werkstücks im Schweißbereich. Zur Verarbeitung unterschiedlicher Materialdicken oder Werkstücken mit Lagensprüngen kann alternativ auch die Oberseite der Impulsheizung oder der Dauerheizung mit einem flexiblen Material ausgestattet sein.

Bei einer Kombination der Impulsheizung mit einer Heißluftbeheizung des Werkstücks können die Materialien schneller miteinander verbunden werden, da die Impulsheizung zusätzliche Wärme in die Naht einbringt. Die bei der Heißluftschweißung mögliche schnelle Temperaturänderung in der Schweißzone des Werkstücks wird durch die Impulsheizung weiter verbessert. Insbesondere bei einer Regelung des Schweißvorgangs ist eine rasche Nachführung der Schweißparameter, insbesondere der Schweißtemperatur, gut möglich.

Bei einer Kombination der Impulsheizung mit Ultraschall kann die Impulsheizung mit einer flexiblen Unterlage ausgestattet werden, so daß auch Materialien unterschiedlicher Dicke oder mit Lagensprüngen verarbeitet werden können. Weiterhin kann bei dieser Kombination aufgrund der Ultraschalleinwirkung auf die Werkstofflagen des Werkstücks eine eventuell vorhandene Kontamination der Werkstofflagen mit Produktrückständen aus dem Schweißnahtbereich heraus gedrängt werden.

Bei einer Kombination der Impulsheizung mit dem Hochfrequenzschweißverfahren wird die Einschränkung des Hochfrequenzschweißverfahrens auf die Verwendung von polaren Kunststoffen reduziert bzw. vermindert. Es können auch Materialien verarbeitet werden, welche nicht optimal auf das Hochfrequenzschweißverfahren ausgelegt sind. Wenn diese Verfahren gegenseitig zueinander arbeiten, kann die Impulsheizung mit einer flexiblen Unterlage ausgestattet werden, so daß auch Materialien unterschiedlicher Dicke oder mit Lagensprüngen verarbeitet werden können.

Durch die Kombination der Impulsheizung mit dem Induktionsschweißverfahren wird die Einschränkung des Induktionsschweißverfahrens auf die Verwendung von metallisierten oder Metallhaltigen Kunststoffen reduziert bzw. vermindert. Es können auch Materialien verarbeitet werden, welche nicht optimal auf das Induktionsschweißverfahren ausgelegt sind. Wenn diese Verfahren gegenseitig zueinander arbeiten kann die Impulsheizung mit einer flexiblen Unterlage ausgestattet werden, so daß auch Materialien unterschiedlicher Dicke oder mit Lagensprüngen verarbeitet werden können.

Bei der Kombination der Impulsheizung mit dem Laserschweißverfahren wird die Einschränkung des Laserschweißverfahrens auf die Verwendung lichtabsorbierenden Kunststoffen reduziert bzw. vermindert. Es können auch Materialien verarbeitet werden, welche nicht optimal auf das Laserschweißverfahren ausgelegt sind.

Bei der Kombination des Ultraschallschweißverfahrens mit dem Schweißverfahren mit Dauerheizung werden die Anforderungen an das zu verarbeitende Material reduziert. Es können somit Materialien verarbeitet werden, welche für das Ultraschallverfahren nicht gut geeignet sind. Die Kombination der Verfahren erweitert den Toleranzbereich des Verarbeitungsprozesses. Die Dauerheizung kann hierbei ein starrer oder flexibler/weicher Körper (z.B. Metall, Plastik, Silikon, Kunststoff, u.a.) sein.

Die Kombination des Ultraschallschweißverfahrens mit Induktionsschweißung ermöglicht die Reduzierung der Anforderungen an das zu verarbeitende Material. Es können somit Materialien verarbeitet werden, welche z.B. weder für das Ultraschallschweißverfahren noch für das Induktionsschweißverfahren gut geeignet sind. Die Kombination der Verfahren erweitert den Toleranzbereich des Verarbeitungsprozesses.

Bei der Kombination des Ultraschallschweißverfahrens mit dem Hochfrequenzschweißverfahren werden die Anforderungen an das zu verarbeitende Material reduziert. Es können somit Materialien verarbeitet werden, welche z.B. weder für das Ultraschallschweißverfahren noch für das Hochfrequenzschweißverfahren gut geeignet sind.

Bei der Kombination des Hochfrequenzschweißverfahrens mit dem Schweißverfahren mit Dauerheizung werden die Anforderungen an das zu verarbeitende Material reduziert. Es können somit auch Materialien verarbeitet werden, welche für das Hochfrequenzschweißverfahren nicht gut geeignet sind. Die Kombination der Verfahren erweitert den Toleranzbereich des Verarbeitungsprozesses.

Bei der Kombination des Hochfrequenzschweißverfahrens mit dem Induktionsschweißverfahren werden die Anforderungen an das zu verarbeitende Material reduziert. Es können somit Materialien verarbeitet werden, welche z.B. weder für das Hochfrequenzschweißverfahren noch für das Induktionsschweißverfahren gut geeignet sind. Die Kombination der Verfahren erweitert den Toleranzbereich des Verarbeitungsprozesses.

## Patentansprüche

1. Schweißeinrichtung zum Verschweißen von wenigstens zwei Werkstofflagen eines Werkstücks (7), mit einem Schweißwerkzeug (2), das einen ersten Werkzeugteil (9) und einen zweiten Werkzeugteil (10) umfasst, die relativbeweglich zueinander angeordnet sind und die einen größenvariablen Schweißspalt (11) zur Aufnahme und Verschweißung des Werkstücks (7) bilden, mit einer Schweißenergiequelle (5) zur Bereitstellung von Schweißenergie, mit einer Einstelleinrichtung (3) zur Einleitung einer Bewegung auf wenigstens eines der Werkzeugteile (9, 10), wobei der erste und/oder der zweite Werkzeugteil (9, 10) mit der Schweißenergiequelle (5) verbunden ist und für eine kontaktgebundene Einkopplung von Schweißenergie auf das Werkstück (7) ausgebildet ist und mit einem Steuergerät (4) zur Beeinflussung eines Energiestroms von der Schweißenergiequelle (5) zum Werkzeugteil (9, 10) und/oder zur Ansteuerung der Einstelleinrichtung (3), **dadurch gekennzeichnet, dass** dem Schweißwerkzeug (2) ein Energiewandlermittel (6) zugeordnet ist, das mit dem Steuergerät (4) und mit einer Energiequelle verbunden ist und das für eine kontaktlose Einkopplung von Schweißenergie in das Werkstück (7) ausgebildet ist.

2. Schweißeinrichtung nach Anspruch 1, **dadurch gekennzeichnet, dass** dem ersten Werkzeugteil (9) oder dem ersten und dem zweiten Werkzeugteil (9, 10) eine Fluidleitung (34; 44) für ein flüssiges oder gasförmiges Wärmeträgerfluid und/oder eine elektrische Heizeinrichtung (25; 56) und/oder ein Ultraschallgenerator zugeordnet sind.

3. Schweißeinrichtung nach Anspruch 1 oder 2, **dadurch gekennzeichnet, dass** das Energiewandlermittel (6) für die kontaktlose Einkopplung von Schweißenergie auf das Werkstück (7) abseits des ersten und zweiten Werkzeugteils (9, 10) angeordnet ist.

4. Schweißeinrichtung nach Anspruch 1 oder 2, **dadurch gekennzeichnet, dass** das Energiewandlermittel (6) für die kontaktlose Einkopplung von Schweißenergie auf das Werkstück (7) dem ersten und/oder dem zweiten Werkzeugteil (9, 10) zugeordnet ist.

5. Schweißeinrichtung nach Anspruch 1, 2, 3 oder 4, **dadurch gekennzeichnet, dass** das Energiewandlermittel (6) mit der Schweißenergiequelle (5) des wenigstens einen Werkzeugteils (9, 10) verbunden ist.

6. Schweißeinrichtung nach einem der vorhergehenden Ansprüche, **dadurch gekennzeichnet, dass** das Energiewandlermittel (6) einen Hochfrequenzgenerator und/oder eine Induktionsspule und/oder eine Quelle für elektromagnetische Wellen und/oder eine Heißgasquelle umfasst.

7. Schweißeinrichtung nach einem der vorhergehenden Ansprüche, **dadurch gekennzeichnet, dass** das Steuergerät (4) für eine Koordination einer Energieeinkopplung in das Werkstück (7) über wenigstens ein Werkzeugteil (9, 10) und über das Energiewandlermittel (6) ausgebildet ist.

8. Verfahren zum Verschweißen von wenigstens zwei Werkstofflagen eines Werkstücks (7) mit den Schritten: Einlegen des Werkstücks (7) in einen von zwei zueinander relativbeweglichen Werkzeugteilen (9, 10) eines Schweißwerkzeugs (2) gebildeten Schweißspalt (11), Schließen des Schweißspalts (11) durch eine Relativbewegung der beiden Werkzeugteile (9, 10) zueinander, um eine Anpresskraft auf die Werkstofflagen aufzubringen, kontaktgebundene Einkopplung von Schweißenergie auf die Werkstofflagen über wenigstens eine der beiden Werkzeugteile (9, 10) und Einkopplung von Schweißenergie mittels eines Energiewandlermittels (6), das die Schweißenergie kontaktlos in die Werkstofflagen einkoppelt.

9. Verfahren nach Anspruch 8, **dadurch gekennzeichnet, dass** über das wenigstens eine Werkzeugteil (9, 10) eine kontaktgebundene Einkopplung von Wärmeenergie und/oder von mechanischer Schwingungsenergie vorgenommen wird und dass das Energiewandlermittel (6) die Schweißenergie als elektrisches und/oder elektromagnetisches und/oder magnetisches Energiefeld bereitstellt.

10. Verfahren nach Anspruch 9, **dadurch gekennzeichnet, dass** die vom Energiewandlermittel (6) bereitgestellte Schweißenergie zu einer Erwärmung des Werkstücks (7) im Bereich des Schweißspalts (11) durch Absorption von Wärme im Werkstück (7) und/oder durch Energieumwandlung in Wärme im Werkstück führt.
